# EUROPÄISCHE PATENTSCHRIFT

(11) **EP 0 355 548 B1**
(45) Veröffentlichungstag und Bekanntmachung des Hinweises auf die Patenterteilung: **15.09.1993**
(21) Anmeldenummer: 89114536.9
(22) Anmeldetag: 07.08.1989
(51) Int. Cl.: B29C 59/12, B05D 3/14

(54) **Selbsttragendes Flächengebilde aus einem Substrat und einem Überzug und Verfahren zu seiner Herstellung**
Self-supporting sheet comprising a substrate and a coating, and method for producing same
Feuille autoportante constituée d'un substrat et d'un revêtement et son procédé de fabrication

(30) Priorität: 16.08.1988 DE 3827634; 16.08.1988 DE 3827632
(43) Veröffentlichungstag der Anmeldung: 28.02.1990
(73) Patentinhaber: HOECHST AKTIENGESELLSCHAFT, 65926 Frankfurt am Main (DE)
(72) Erfinder: Gribbin, John Derek, Dr., D-6229 Schlangenbad 2 (DE); Bothe, Lothar, Dr., D-6500 Mainz-Gonsenheim (DE); Dinter, Peter, D-6227 Oestrich-Winkel 3 (DE); Dallmann, Hermann, Dr., D-6200 Wiesbaden (DE)

(56) Entgegenhaltungen:
- EP-A- 0 133 832
- EP-A- 0 160 889
- EP-A- 0 279 371
- FR-A- 1 435 693
- FR-A- 2 578 176
- GB-A- 1 526 918
- US-A- 3 274 089

## Beschreibung

Die Erfindung betrifft ein selbsttragendes Flächengebilde mit einer Substratschicht und einem Überzug, der durch Behandlung wenigstens einer Oberfläche der Substratschicht durch eine elektrische Koronaentladung in einer Koronaentladungszone zwischen einer spannungsführenden Elektrode und einer Gegenelektrode hergestellt ist, und ein Verfahren zur Oberflächenvorbehandlung einer Substratschicht mittels einer elektrischen Koronaentladung in einer Koronaentladungszone zwischen einer spannungsführenden Elektrode, die mit einer Wechselspannung von 5000 bis 25000 V beaufschlagt ist, und einer geerdeten Gegenelektrode, und zum Aufbringen eines Überzugs auf die Substratschicht mittels eines Aerosols.

Ein derartiges Flächengebilde und ein Verfahren zu einer Oberflächenvorbehandlung sind in der EP-A - 0 279 371 beschrieben.

Hierfür ist eine Anordnung mit einem Generator und einer Koronaentladungseinrichtung vorgesehen, wobei der Generator die Entladungselektrode der Koronaentladungseinrichtung mit einem hochfrequenten Wechselstrom hoher Spannung beaufschlagt. Eine geerdete Gegenelektrode bildet der Metallkern einer Walze, über deren Umfangsbeschichtung eine Folienbahn transportiert wird. Ein Gehäuse der Koronaentladungseinrichtung ist über eine Leitung mit einer Zerstäubereinrichtung verbunden, in der eine Flüssigkeit zu einem schwebfähigen Aerosol mittels einer piezoelektrisch arbeitenden Ultraschallschwingsystems oder durch mit Ultraschallgeschwindigkeit arbeitende Zweistoff-Zerstäuberdüsen zerstäubt wird. Die Durchsatzmenge reguliert ein Gebläse, das an die Zerstäubereinrichtung angeschlossen ist und das Trägergas für das Aerosol durch die Zerstäubereinrichtung hindurch in die Koronaentladungseinrichtung führt.

Bei flächigen Formkörpern aus polymeren Werkstoffen, wie z.B. Folien und Platten, führen unzureichende Schlupf- und Reibungseigenschaften bei der Produktion und Weiterverarbeitung derselben zu einer Vielzahl unerwünschter Probleme. Hierbei sind sowohl die Haft- und Gleitreibungen und das Blocken gegeneinander als auch gegen Führungs- oder Umlenkelemente, wie z.B. Walzen, gemeint.

Eine üblicherweise geeignete Maßnahme zur Lösung dieses Problems besteht darin, in das Material der Substratschicht Inertteilchen einzuarbeiten, die zu einer bestimmten Oberflächenstruktur führen und sich damit positiv auf das Gleitverhalten des Formkörpers auswirken. Beispiele für derartige Inertteilchen, die entweder während der Herstellung des Thermoplasten oder über ein Masterbatch während der Herstellung des Formkörpers eingearbeitet werden können, sind anorganische natürliche oder synthetische Verbindungen wie BaSO₄, CaCO₃, TiO₂, Kaolin, Ca-Phosphate etc. oder organische Partikel, z. B. aus vernetzten Acrylaten. Die Konzentrationen bewegen sich hierbei innerhalb weiter Grenzen, d. h. im Bereich von 0,001 bis 1,0 Gew.-%

Wie bereits erwähnt kann durch diese Maßnahme eine deutliche Verbesserung der Gleiteigenschaften der Formkörper erzielt werden, was sich auch positiv auf den Gebrauchswert der daraus hergestellten Gegenstände auswirkt.

Nachteilig hierbei ist jedoch, daß die Inertpartikel vor der Einarbeitung einem sehr aufwendigen, kostenintensiven Aufbereitungsprozeß unterzogen werden müssen, um andersartige Nachteile wie z. B. einen erhöhten Abrieb beim Kontakt mit Führungselementen und dergleichen aus zuschließen. Hinzu kommt, daß in manchen Fällen auch die optischen Eigenschaften der Substrate negativ beeinflußt werden können.

In EP-A-0 153 853 wird eine Magnetbandträgerfolie mit einer netzförmigen, feine Partikel enthaltenden Beschichtung beschrieben, die ihr die notwendigen Reibungseigenschaften verleiht. Dieses Verfahren erfordert das Zusammenmischen der Beschichtungsmaterialien wie z. B. der kolloidale Silikate enthaltenden polymeren Bindemittel sowie das Aufbringen derselben auf die Oberfläche des Substrats zwischen den einzelnen Orientierungsschritten. Nachteilig an diesem Verfahren ist u. a., daß die Ausbildung der Strukturen wenigstens einen Streckschritt voraussetzt, d. h. mit dem Herstellungsprozeß der Folie verknüpft ist.

Aufgabe der vorliegenden Erfindung war es, gut handhabbare Flächengebilde, wie Folien, Platten und dergleichen, mit schlupffördernden Oberflächen zu schaffen, wobei die schlupffördernden Substanzen und die daraus resultierenden Strukturen unabhängig vom Herstellungsprozeß aufgebracht werden können und trotzdem eine dauerbeständig gute Verankerung auf dem Substrat aufweisen.

Gelöst wird diese Aufgabe durch ein selbsttragendes Flächengebilde in der Weise, daß der Überzug eine Schichtdicke, entsprechend einem Flächengewicht von 1 bis 100 mg/m², besitzt und zur Gleitverbesserung ein filmbildendes polymeres Mittel enthält, das während der Koronaentladung als Aerosol in die Koronaentladungszone eingebracht wird.

In Ausgestaltung der Erfindung enthält das Flächengebilde als Substratschicht eine Folie aus thermoplastischem Kunststoff, insbesondere eine biaxial orientierte Polyesterfolie oder eine biaxial orientierte Polypropylenfolie. Ebenso kann die Substratschicht aus Materialien, wie Papier, Platten auf der Basis von geschäumten Polymeren, Folien auf polymerbasis, Geweben, bestehen.

Beispiele für Polymere sind insbesondere Polymerfolien, z.B. Folien aus natürlichen und synthetischen Polymeren wie Cellulose, Celluloseester, Polyvinylchlorid, Polystyrol, Styrolcopolymere mit Butadien, Polycarbonat, Polymere und Copolymere von Olefinen wie Ethylen, Propylen, Butylen, Methylpenten usw., Polysulfon, aliphatischen und aromatischen Polyestern, Polyimiden, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid usw. (vgl. Ullmanns Encyclopädie der technischen Chemie, Verlag Chemie, Weinheim, 4. neubearbeitete und erweiterte Auflage (1976), Seite 673 ff; Encyclopedia of Polymer Science and Eng., Vol. 7, John Wiley & Sons (1973), Seite 73 ff). Die Herstellung von selbsttragenden, orientierten oder nicht orientierten Folien aus den genannten Polymeren erfolgt nach verschiedenen bekannten Technologien, die in der zitierten Literatur ebenfalls beschrieben sind, wobei unter dem Begriff selbsttragende Folie sowohl Monofolien aus einer Schicht wie auch Mehrschichtfolien aus mehreren Schichten aus gleichen oder verschiedenen Polymermaterialien oder Laminate enthaltend Schichten aus Kunststoffen und aus Nichtkunststoffen wie z.B. Papier oder Metall zu verstehen sein sollen.

Der Überzug auf der Substratschicht entsteht durch das gleichzeitige Einwirken einer elektrischen Coronaentladung in Anwesenheit eines Aerosols auf die Substratoberfläche. Durch die Coronaentladung werden Reaktionsmechanismen ausgelöst und/oder begünstigt, die eine chemische Oberflächenmodifizierung des behandelten Substrats zur Folge haben. Man stellt sich vor, daß durch die Coronaentladung das Aerosol bzw. die darin enthaltenen Mittel auf der Substratoberfläche festhaftend verankert werden.

Die spannungsführende Elektrode wird für die Coronaentladung von einem Hochspannungsgenerator mit einer Wechselspannung zwischen 5.000 und 25.000 V beaufschlagt. Die zwischen der spannungsführenden Elektrode und der geerdeten Gegenelektrode anliegende Wechselspannung soll dabei proportional zu der Transportgeschwindigkeit sein, mit der sich das zu behandelnde Substrat durch die Coronaentladungszone bewegt, d.h. bei höherer Transportgeschwindigkeit soll sich die Wechselspannung im oberen Bereich bewegen, während bei geringeren Transportgeschwindigkeiten eine mittlere bis niedrige Spannung im Bereich von 5.000 bis 18.000 V eingestellt werden kann, um eine gleich große Wirkung zu erzielen.

Die Aufbereitung der Aerosole kann mit Hilfe bekannter Zweistoff-Zerstäubungsdüsen oder bevorzugt mittels piezoelektrischer Ultraschall-Zerstäubungssysteme erfolgen. Zur Herstellung der Aerosole können Emulsionen, bevorzugt Dispersionen oder Lösungen von organischen polymeren Bindemitteln eingesetzt werden, die in Löse- und Dispersionsmitteln, ganz besonders bevorzugt in Wasser, vorgelegt werden.

Ein Verfahren zur Behandlung der Oberflächen von Kunststoffsubstraten mittels Coronaentladung bei gleichzeitiger Aerosolbesprühung sowie eine Anordnung zur Durchführung dieses Verfahrens sind in allen Einzelheiten bereits in der deutschen Patentanmeldung P 37 05 482.1 angegeben.

Beispiele für die filmbildenden polymeren Mittel sind Homo- oder Copolymere auf Basis von Acrylsäure oder Methacrylsäure oder deren Derivaten, nichtkristalline Copolyester oder Copolyesterether, die gegebenenfalls alkalimetallhaltige Bausteine wie z. B. Natriumsalz der 5-Sulfoisophthalsäure in Mengen von 1 bis 50 Mol-% enthalten können oder Mischungen von diesen. Auch acrylathaltige Copolymere, die vernetzbar sind, z. B. mit Melamin, Polyurethane, Polyolefine oder Ionomere, die in Wasser dispergiert sind, sind geeignete filmbildende Mittel. Weitere Beispiele sind wäßrige Lösungen oder Emulsionen von bifunktionellen Fluorpolyethern, insbesondere bifunktionelle Derivate wie Diole, Dicarbonsäuren und Diester. Als weitere Gleitmittel sind u.a. Monocarbonsäureester des Glycerins mit langkettigen Fettsäuren wie Glycerinmonostearat und Organosiloxane wie Polydiorganosiloxane zugesetzt. Über die Auswahl der filmbildenden Mittel können dem Substrat neben den erfindungsgemäß angestrebten Gleiteigenschaften weitere wertvolle Oberflächeneigenschaften wie verbesserte Haftung gegenüber aufgebrachten Materialien, Siegelfähigkeit etc. verliehen werden.

Die aufzubringende Menge an filmbildendem Mittel kann in weiten Grenzen variiert werden und wird vorzugsweise auf den jeweils vorliegenden Anwendungsfall abgestimmt.

Nach dem erfindungsgemäßen Verfahren werden die filmbildenden Mittel zunächst in einem Löse- oder Dispersionsmittel dispergiert, emulgiert oder gelöst, wobei bevorzugt ein wäßriges Löse- oder Dispersionsmittel zur Anwendung kommt, und wird dann zusammen mit einem Trägergasstrom in den Coronaentladungsraum als Aerosol versprüht. Die Dispersionen oder Emulsionen weisen im allgemeinen einen Feststoff- bzw. Tröpfchengehalt von 0,5 bis 20 Gew.-% auf, bezogen auf das Gesamtgewicht der Dispersion bzw. Emulsion, die Lösungen weisen Konzentrationen im Bereich von 1 bis 30 Gew.-% auf. Es kann gegebenenfalls von Vorteil sein, zur Verbesserung der Dispergier-oder Emulgierbarkeit die Temperatur der Trägerflüssigkeit zu erhöhen.

Als Trägergas für das Aerosol wird im einfachsten Fall Luft eingesetzt, es kann aber auch Stickstoff oder ein anderes inertes Gas, z.B. ein Edelgas, eingesetzt werden. Besonders vorteilhafte Verankerungseffekte können andererseits auch mit reaktionsfähigen Gasen wie beispielsweise mit Halogenen, Kohlendioxid, Ammoniak oder Formaldehyd, gegebenenfalls in Mischung mit inerten Gasen, erzielt werden.

Der Überzug kann nach dem erfindungsgemäßen Verfahren nach der Fertigstellung der Substratschicht, off-line, auf diese aufgebracht werden, dies gilt insbesondere, wenn plattenförmige Substratschichten überzogen werden sollen. Der Überzug kann jedoch genausogut auch während des Herstellungsprozesses der Substratschicht, in-line, aufgebracht werden. Bekanntlich werden z. B. biaxial orientierte Folien aus thermoplastischen Kunststoffen durch Extrudieren einer Schmelze, nachfolgendes biaxiales Streckorientieren und anschliessendes Hitzefixieren hergestellt. Dabei kann der Überzug vor, zwischen oder nach den einzelnen in aufeinanderfolgender Reihenfolge ablaufenden Streckschritten aufgebracht werden oder vor oder nach der Hitzefixierung.

Aufgrund des besonderen erfindungsgemäßen Auftragverfahrens weist der Überzug eine besonders gute Haftung auf der Substratoberfläche auf. Die Schichtdicke des Überzugs entspricht üblicherweise einem Flächengewicht im Bereich von nur 1 bis 100 mg/m².

Für die erfindungsgemäßen Flächengebilde eignen sich alle Anwendungsgebiete, bei denen gute Gleiteigenschaften erwünscht sind. Besonders erwähnt sei zum Beispiel der Einsatz von Verpackungsfolien auf schnellaufenden Verpackungsmaschinen oder Folien für technische Anwendungen wie z. B. Klebebänder, Magnetbandfolien, Kondensatordielektrika oder Trägerfolien für reprografische oder fotografische Anwendungen.

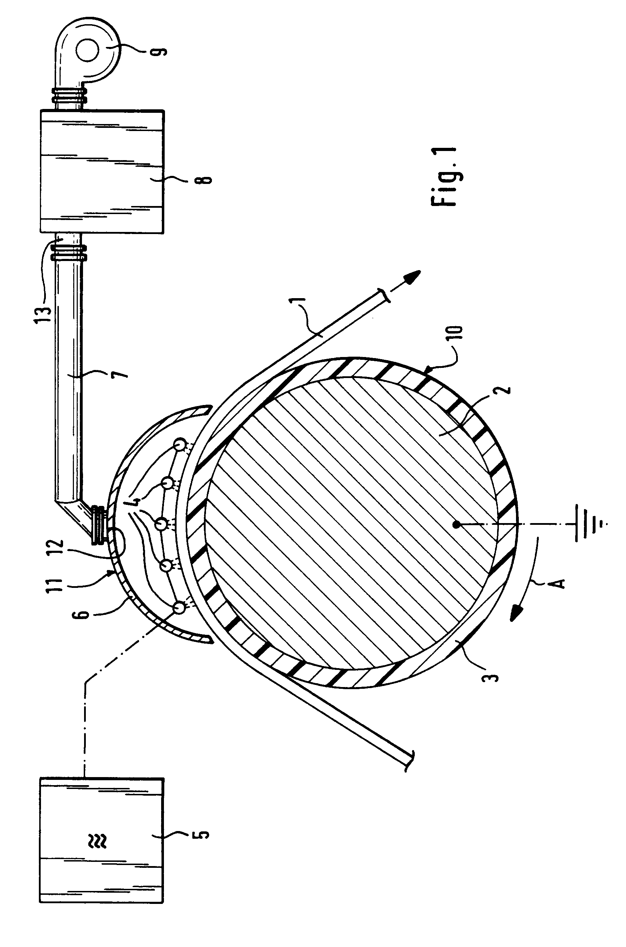

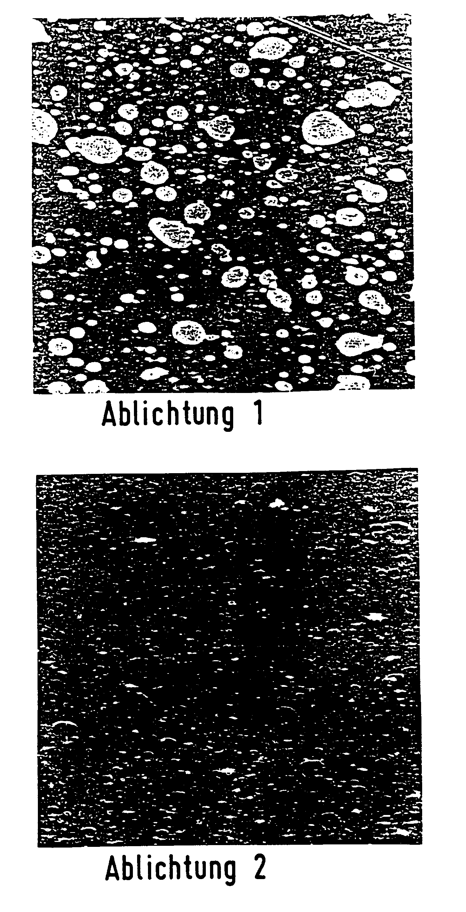

Die Erfindung wird im folgenden unter Bezugnahme auf die einzige Figur näher erläutert, die eine Aerosol-Corona-Vorrichtung zum Behandeln verschiedener Polymerfolien zeigt. Die Vorrichtung besteht aus einem Generator 5, der mit einer Coronaentladungseinrichtung 11 verbunden ist. Der Generator 5 legt an Entladungselektroden 4 der Coronaentladungseinrichtung 11 einen hochfrequenten Wechselstrom hoher Spannung an. Als geerdete Gegenelektrode dient der Metallkern 2 einer Walze 10, über deren Umfangsbeschichtung 3 eine zu überziehende, selbsttragende Polymerfolienbahn 1 transportiert wird. Ein Gehäuse 6 umschließt die Entladungselektroden 4 der Coronaentladungseinrichtung 11 und ist über eine Leitung 7, z.B. eine Rohr- oder Schlauchleitung, mit einer Zerstäubereinrichtung 8 verbunden, in der eine wäßrige Flüssigkeit zu einem schwebefähigen Aerosol mittels eines piezoelektrisch arbeitenden Ultraschallsystems zerstäubt wird. Ein Gebläse 9 ist an die Zerstäubereinrichtung angeschlossen und befördert das Trägergas (Luft) für das Aerosol durch die Zerstäubereinrichtung hindurch in die Coronaentladungseinrichtung 11. Die Leitung 7 ist mit einem Rohrstutzen 13 der Zerstäubereinrichtung 8 und einem Rohrstutzen 12 des Gehäuses 6 verbunden.

Durch die nachfolgenden Beispiele sollen die Erfindung und die damit zu erreichenden nacharbeitbaren Vorteile noch deutlicher beschrieben werden.

Mittels einer Aerosol-Corona-Vorrichtung entsprechend der beigefügten Figur wurden verschiedene Polymerfolien behandelt. Die Transportgeschwindigkeit der selbsttragenden Polymerfolien beträgt, wenn nicht anders vermerkt, 20 m/min. Die Coronaleistung betrug jeweils 1 000 W (entsprechend einer Einstellung von 5 500 V).

Die Oberflächenrauhigkeit wurde durch Messungen nach DIN 4768 bestimmt. Die Schlupfeigenschaften der Folie werden durch Messungen nach DIN 53 375 bestimmt, wobei die Messung der Reibung an fünf, über die gesamte Folienbreite verteilten Meßstellen erfolgt.

Zur Bildung einer Substratschicht wurde ein pigmentfreier Polyesterrohstoff mit einem SV-Wert von 810 aufgeschmolzen, mittels einer Breitschlitzdüse zu einer Folie geformt, die dann auf einer gekühlten, hochglanzpolierten Walze zu einer amorphen Folie abgeschreckt wurde. Die amorphe Vorfolie wurde bei 95 °C längsgestreckt und anschließend bei 110 °C quergestreckt, wobei das Flächenstreckverhältnis 13 betrug. Die erhaltene 15 µm starke Folie wurde anschließend bei 230 °C (Rahmentemperatur) thermofixiert. Die Folie wurde anschließend unter Verwendung der beschriebenen Vorrichtung beschichtet.

### Beispiel 1

Die Folie wurde mit einer vernetzbares Acrylat enthaltenden Dispersion mit einem Feststoffgehalt von 4 Gew.-% erfindungsgemäß behandelt. Die genaue Zusammensetzung des Acrylates war: 52 Mol-% Methylmethacrylat, 43 Mol-% Ethylacrylat und 5 Mol-% Methacrylamid. Das Acrylat wurde im Verhältnis 4 zu 1 mit einem Vernetzer auf Basis von Melamin-Formaldehyd gemischt. Die Ablichtung 1 zeigt eine rasterelektronenmikroskopische Aufnahme der Oberfläche der erhaltenen Folie bei 300facher Vergrößerung. Auf dieser Aufnahme ist deutlich zu erkennen wie eine mondkraterähnliche Strukturierung entstanden ist, bei der große und kleine, mehr oder weniger geschlossene Strukturen in rein zufälliger Anordnung, entsprechend dem Auftreffen jeweils kleinerer oder größerer Aerosoltröpfchen, über die gesamte Oberfläche der Substratschicht verteilt sind. Die Haft- und Gleitreibungszahl (DIN 53 375) der Folie betrug 33. Die Trübung der Folie betrug 1 %, wobei die Trübung bestimmt wurde gemäß ASTM-D-1003-61 Methode A.

### Beispiel 2

Beispiel 1 wurde wiederholt, jedoch wurde das Aerosol mit Hilfe einer wässrigen Dispersion enthaltend einen Copolyester mit Isophthalsäureeinheiten und 5-Sulfoisophthalsäureeinheiten (35 Mol-%) gebildet. Die Ablichtung 2 zeigt eine rasterelektronenmikroskopische Aufnahme der nach Beispiel 2 hergestellten Folienoberfläche bei 300-facher Vergrößerung. Es ist ebenfalls eine kraterlandschaftsähnliche Struktur zu erkennen, jedoch heben sich die einzelnen Strukturelemente wegen der fehlenden Vernetzung nicht farblich von ihrem Untergrund ab. Die Trübung der Folie nach Beispiel 2 betrug 0,5 %.

### Beispiel 3

Beispiel 1 wurde wiederholt, indem eine wässrige Lösung (Konzentration: 4 Gew.-%) von Polyvinylalkohol eingesetzt wurde. Auf der so hergestellten Folienoberfläche konnten mit Hilfe der rasterelektronenmikroskopischen Untersuchungsmethode keine Strukturierungen festgestellt werden.

### Beispiel 4

Zur Bildung eines Substrats wird ein Polyethylenterephthalatrohstoff, der 1000 ppm SiO₂ als Antiblockmittel enthält, in einem Extruder aufgeschmolzen, mit Hilfe einer Breitschlitzdüse zu einer Folie geformt und zu einer amorphen Vorfolie abgeschreckt. Die Vorfolie wird anschließend bei 95 °C längsgestreckt und bei 110 °C quergestreckt, wobei ein Flächenstreckverhältnis von etwa 13 eingehalten wird. Die erhaltene 50 µm dicke Folie wird danach bei 230 °C in einem Rahmen thermofixiert. Die thermofixierte Folie wird anschließend nach vier Verfahrensvarianten weiterbehandelt.

### Erfindungsgemäße Variante

Die thermofixierte Folie wird einer Coronabehandlung und einer gleichzeitigen Aerosolbeaufschlagung entsprechend dem erfindungsgemäßen Verfahren unterzogen. Das Aerosol wird dabei aus einer 0,12 Gew.-% wäßrigen Lösung eines bifunktionellen Polyfluorpolyethers der Formel

HOH₂C - R_{F} - CH₂OH,

mit R_{F} = Polyfluorpolyether, hergestellt. Die Gleitreibung nach DIN 53 375, gemessen an fünf Stellen über die Folienbreite, ist sehr gleichmäßig und beträgt 0,14 bis 0,15.

Die erhaltene Folie besitzt eine starke Verankerung des den Schlupf verbessernden Überzugs auf dem Substrat. Die Dauerbeständigkeit bzw. die Verankerung des Überzugs bei mechanischer Einwirkung wird in der Weise geprüft, daß zehnmal mit einem Wattebausch über die Folienoberfläche mit einem Anpreßdruck im Bereich von 1 bis 5 kPa gewischt wird. Die anschließend neuerlich gemessene Gleitreibung zeigt keine Veränderung gegenüber den ersten gemessenen Gleitreibungswerten.

### Vergleichsbeipiel 1

Die thermofixierte Folie wird weder einer Coronabehandlung noch einer Aerosolbeaufschlagung unterzogen. Die Gleitreibung ist etwa doppelt so hoch wie im voranstehend angeführten Beispiel und liegt im Bereich von 0,28 bis 0,32 wobei die Schwankung der Gleitreibung, gemessen über die Folienbreite, gering ist bzw. eine gute Gleichmäßigkeit der Reibung über die Folienbreite vorliegt.

### Vergleichsbeispiel 2

Die thermofixierte Folie wird einer Coronabehandlung ohne Aerosolbeaufschlagung unterzogen. Die Gleitreibung beträgt etwa den 2,6 bis 2,7 fachen Wert des erfindungsgemäßen Beispiels und liegt im Bereich von 0,37 bis 0,40. Die Schwankung der Gleitreibung, gemessen über die Folienbreite, ist gering, d.h. mit anderen Worten, daß die Gleichmäßigkeit der Reibung über die Folienbreite gut ist.

### Vergleichsbeispiel 3

Die thermofixierte Folie wird ohne Coronabehandlung einer Aerosolbeaufschlagung unterzogen. Die Gleitreibung ist geringer als bei den Vergleichsbeispielen 1 und 2. Sie hat etwa den 1,6 bis 2,1 fachen Wert des erfindungsgemäßen Beispiels und liegt im Bereich von 0,22 bis 0,29.

Die Schwankung der Gleitreibung, gemessen über die Folienbreite ist somit groß, so daß von einer geringen Gleichmäßigkeit über die Folienbreite gesprochen werden muß.

Die Meßergebnisse der Gleitreibung des erfindungsgemäßen Besipiels und der Vergleichsbeispiele 1 bis 3 sind in der nachfolgenden Tabelle zusammengestellt.

| Gleitreibung nach DIN 53 375 an fünf Meßpunkten über die Folienbreite gemessen | | | | | | Gleichmäßigkeit der Reibung über die Folien breite |
|---|---|---|---|---|---|---|
| Meßpunkte | 1 | 2 | 3 | 4 | 5 | |
| Beispiel | 0,14 | 0,15 | 0,14 | 0,15 | 0,15 | sehr gut |
| Vergleichsbeispiel 1 | 0,30 | 0,29 | 0,31 | 0,28 | 0,29 | gut |
| Vergleichsbeispiel 2 | 0,38 | 0,40 | 0,37 | 0,39 | 0,38 | gut |
| Vergleichsbeispiel 3 | 0,22 | 0,28 | 0,23 | 0,29 | 0,26 | gering |

## Patentansprüche

1. Selbsttragendes Flächengebilde mit einer Substratschicht und einem Überzug, der durch Behandlung wenigstens einer Oberfläche der Substratschicht durch eine elektrische Koronaentladung in einer Koronaentladungszone zwischen einer spannungsführenden Elektrode und einer Gegenelektrode hergestellt ist, dadurch gekennzeichnet, daß der Überzug eine Schichtdicke, entsprechend einem Flächengewicht von 1 bis 100 mg/m², besitzt und zur Gleitverbesserung ein filmbildendes polymeres Mittel enthält, das während der Koronaentladung als Aerosol in die Koronaentladungszone eingebracht wird.

2. Flächengebilde nach Anspruch 1, dadurch gekennzeichnet, daß es als Substratschicht eine Folie aus thermoplastischem Kunststoff enthält, insbesondere eine biaxial orientierte Polyesterfolie oder eine biaxial orientierte Polypropylenfolie.

3. Flächengebilde nach Anspruch 1, dadurch gekennzeichnet, daß das Substrat aus Materialien wie Papier, Platten auf der Basis von geschäumten Polymeren, Folien auf Polymerbasis, Geweben besteht.

4. Flächengebilde nach Anspruch 3, dadurch gekennzeichnet, daß das Substrat aus Folien aus natürlichen und synthetischen Polymeren, wie Cellulose, Celluloseester, Polyvinylchlorid, Polystyrol, Styrolcopolymeren mit Butadien, Polycarbonat, Polymeren und Copolymeren von Olefinen, wie Ethylen, Propylen, Butylen, Methylpenten, Polysulfon, aliphatischen und aromatischen Polyestern, Polyimiden, Polyisobutylen, Polymethylmethacrylat, Polyphenylensulfid, Polyurethan, Polyamid, Polyarylethersulfon, Polyamidimid, Polyetherimid und dergl., besteht.

5. Flächengebilde nach Anspruch 3, dadurch gekennzeichnet, daß das Substrat aus Kunstfasergeweben auf der Basis von Polyestern, Polyacrylnitril, Polyamiden, Viskose, Mischungen dieser Kunstfasergewebe untereinander oder mit Naturfasern besteht.

6. Flächengebilde nach einem der Ansprüche 1 bis 5, dadurch gekennzeichnet, daß als filmbildende polymere Mittel Homo- oder Copolymere auf Basis von Acrylsäure oder Methacrylsäure oder deren Derivaten, nichtkristalline Copolyester oder Copolyesterether, die gegebenenfalls alkalimetallhaltige Bausteine wie z. B. Natriumsalz der 5-Sulfoisophthalsäure in Mengen von 1 bis 50 Mol-% enthalten können oder Mischungen von diesen, acrylathaltige Copolymere, die vernetzbar sind, z. B. mit Melamin, Polyurethane, Polyolefine oder Ionomere oder bifunktionelle Fluorpolyether, insbesondere bifunktionelle Derivate wie Diole, Dicarbonsäuren und Diester, geeignet sind.

7. Flächengebilde nach Anspruch 6, dadurch gekennzeichnet, daß als weitere Gleitmittel Monocarbonsäureester des Glycerins mit langkettigen Fettsäuren wie Glycerinmonostearate, Organosiloxane wie Polydiorganosiloxane zugesetzt sind.

8. Verfahren zur Oberflächenvorbehandlung einer Substratschicht mittels einer elektrischen Koronaentladung in einer Koronaentladungszone zwischen einer spannungsführenden Elektrode, die mit einer Wechselspannung von 5000 bis 25000 Volt beaufschlagt ist, und einer geerdeten Gegenelektrode zum Aufbringen eines Überzugs auf die Substratschicht mittels eines Aerosols, dadurch gekennzeichnet, daß ein filmbildendes, gleitverbesserndes polymeres Mittel in einem Löse- und Dispersionsmittel dispergiert oder emulgiert wird, daß die Dispersion oder Emulsion, bezogen auf ihr Gesamtgewicht, einen Gehalt von 0,1 bis 20 Gew.%, insbesondere von 0,5 bis 10 Gew.%, aufweist und daß die Dispersion oder Emulsion zusammen mit einem Trägergas als Aerosol in der Koronaentladungszone versprüht wird.

9. Verfahren nach Anspruch 9, dadurch gekennzeichnet, daß die Transportgeschwindigkeit, mit der sich das zu behandelnde Substrat durch die Coronaentladungszone bewegt, proportional zu der Höhe der Wechselspannung ist, mit der die Coronaentladung betrieben wird.

10. Verfahren nach den Ansprüchen 9 und 10, dadurch gekennzeichnet, daß die Aerosole mit Hilfe von Zweistoff-Zerstäuberdüsen oder piezoelektrischen Ultraschall-Zerstäubungssystemen in die Coronaentladungszone eingebracht werden.

11. Verfahren nach einem der Ansprüche 9 bis 11, dadurch gekennzeichnet, daß die Lösungen eine Konzentration von 1 bis 30 Gew.-% polymerer Mittel aufweisen, bezogen auf das Gesamtgewicht der Lösungen, vorzugsweise von 5 bis 20 Gew.-%.

12. Verfahren nach Anspruch 9, dadurch gekennzeichnet, daß als Trägergas ein inertes Gas wie Luft, Stickstoff oder Edelgas eingesetzt wird.

13. Verfahren nach Anspruch 9, dadurch gekennzeichnet, daß als Trägergas ein reaktives Gas wie Halogene, Kohlendioxid, Ammoniak oder Formaldehyd oder Mischungen reaktiver Gase mit inerten Gasen eingesetzt werden.

## Claims

1. Self-supporting sheet-like structure comprising a substrate layer and a coating produced by treating at least one surface of the substrate layer by means of an electric corona discharge in a corona discharge zone, between a live electrode and a counter-electrode, characterized in that the coating has a layer thickness corresponding to a weight per unit area of 1 to 100 mg/m² and contains, for improving slip properties, a film-forming polymeric agent which is introduced into the corona discharge zone as an aerosol during the corona discharge.

2. A sheet-like structure as claimed in claim 1, characterized in that it contains, as the substrate layer, a film of a thermoplastic, in particular a biaxially oriented polyester film or a biaxially oriented polypropylene film.

3. A sheet-like structure as claimed in claim 1, characterized in that the substrate comprises materials such as paper, sheets based on expanded polymers, films based on polymers, and woven fabrics.

4. A sheet-like structure as claimed in claim 3, characterized in that the substrate comprises films of natural and synthetic polymers, such as cellulose, cellulose esters, polyvinyl chloride, polystyrene, styrene copolymers with butadiene, polycarbonate, polymers and copolymers of olefins, such as ethylene, propylene, butylene or methylpentene, polysulfone, aliphatic and aromatic polyesters, polyimides, polyisobutylene, polymethyl methacrylate, polyphenylene sulfide, polyurethane, polyamide, polyaryl ether sulfone, polyamidoimide, polyether imide and the like.

5. A sheet-like structure as claimed in claim 3, characterized in that the substrate consists of woven fabrics of man-made fibers based on polyesters, polyacrylonitrile, polyamides, viscose, or mixtures of the said fabrics with one another or with natural fibers.

6. A sheet-like structure as claimed in any of claims 1 to 5, characterized in that suitable film-forming polymeric agents are homopolymers or copolymers based on acrylic acid or methacrylic acid or their derivates, noncrystalline copolyesters or copolyester ethers, which may contain alkali metal-containing building blocks, such as, for example, the sodium salt of 5-sulfoisophthalic acid, in amounts of from 1 to 50 mol %, or mixtures of these, acrylate-containing copolymers which are crosslinkable, for example with melamine, polyurethanes, polyolefins or ionomers, or bifunctional fluoropolyethers, in particular bifunctional derivatives, such as diols, dicarboxylic acids and diesters.

7. A sheet-like structure as claimed in claim 6, characterized in that monocarboxylic esters of glycerol with long-chain fatty acids, such as glycerol monostearates, and organo-siloxanes, such as polydiorganosiloxanes, are added as further lubricants.

8. Process for pretreating the surface of a substrate layer by means of an electric corona discharge in a corona discharge zone, between a live electrode, to which an alternating current voltage of 5,000 to 25,000 V is applied, and a grounded counter electrode, in order to apply a coating to the substrate layer by means of an aerosol, characterized in that a film-forming, slip-improving polymeric agent is dispersed or emulsified in a solvent and dispersant, that the dispersion or emulsion has a content of polymeric agent of 0.1 to 20 % by weight, in particular 0.5 to 10 % by weight, based on its total weight, and that the dispersion or emulsion is sprayed together with a carrier gas into the corona discharge zone as an aerosol.

9. The process as claimed in claim 8, characterized in that the transport velocity at which the substrate to be treated is moved through the corona discharge zone is proportional to the level of the alternating current voltage at which the corona discharge is operated.

10. The process as claimed in claims 8 and 9, characterized in that the aerosols are introduced into the corona discharge zone with the aid of two-material atomizing nozzles or piezoelectric ultrasonic atomizing systems.

11. The process as claimed in any of claims 8 to 10, characterized in that the solutions have a concentration of polymeric agents of 1 to 30 % by weight, preferably 5 to 20 % by weight, based on the total weight of the solutions.

12. The process as claimed in claim 8, characterized in that the carrier gas used is an inert gas, such as air, nitrogen or a noble gas.

13. The process as claimed in claim 8, characterized in that the carrier gas used is a reactive gas, such as a halogen, carbon dioxide, ammonia or formaldehyde, or a mixture of reactive gases with inert gases.

## Revendications

1. Structure plane autoporteuse comprenant un substrat et un revêtement, qui est obtenue par traitement d'au moins une surface du substrat par une décharge électrique corona, dans une zone de décharge corona comprise entre une électrode sous tension et une contre-électrode, caractérisée en ce que le revêtement présente une épaisseur de couche correspondant à un poids surfacique de 1 à 100 mg/m² et qu'il contient, pour améliorer le glissement, un agent filmogène polymère qui est introduit dans la zone de décharge corona, sous forme d'aérosol, lors de la décharge corona.

2. Structure plane selon la revendication 1, caractérisée en ce qu'elle contient, comme couche substrat, un film en matière thermoplastique, en particulier un film de polyester orienté biaxialement ou un film de polypropylène orienté biaxialement.

3. Structure plane selon la revendication 1, caractérisée en ce que le substrat est constitué de matériaux, tels que papier, plaques à base de polymères expansés, films en polymère, tissus.

4. Structure plane selon la revendication 3, caractérisée en ce que le substrat est constitué d'un film à base d'un polymère choisi parmi les polymères naturels ou synthétiques, tels que cellulose, esters de cellulose, poly(chlorure de vinyle), polystyrène, copolymères de styrène et de butadiène, polycarbonate, polymères et copolymères d'oléfines, telles que: éthylène, propylène, butylène ou méthylpentène, polysulfones, polyesters aliphatiques et aromatiques, polyimides, polyisobutylène, poly(méthacrylate de méthyle), poly(sulfure de phénylène), polyuréthanes, polyamides, poly(aryléthersulfone), poly(amido-imide), poly(étherimide), etc.

5. Structure plane selon la revendication 3, caractérisée en ce que le substrat est constitué de tissus en fibres artificielles à base de polyesters, de polyacrylonitrile, de polyamides, de viscose, de mélanges de ces tissus de fibres artificielles entre eux ou avec des fibres naturelles.

6. Structure plane selon une quelconque des revendications 1 à 5, caractérisée en ce que les agents filmogènes polymères appropriés englobent des homo- ou copolymères à base d'acide acrylique ou d'acide méthacrylique ou de leurs dérivés, des copolyesters ou copoly(ester-éthers) non cristallins, qui peuvent éventuellement renfermer des éléments structuraux contenant un métal alcalin, tels que p.ex. le 5-sulfoisophtalate de sodium, à raison de 1 à 50 % en moles, ou des mélanges de ces substances, des copolymères à base d'acrylate, qui sont réticulables, par exemple avec la mélamine, des polyuréthanes, des polyoléfines ou des ionomères, ou encore des polyéthers fluorés difonctionnels, en particulier des dérivés difonctionnels tels que diols, acides dicarboxyliques et diesters.

7. Structure plane selon la revendication 6, caractérisée en ce qu'on ajoute, comme autres lubrifiants, des monoesters du glycérol avec des acides gras à longue chaîne, tels que le monostéarate de glycérol, et des organosiloxanes, tels que des poly(diorganosiloxanes).

8. Procédé pour le prétraitement de la surface d'un substrat au moyen d'une décharge électrique corona, dans une zone de décharge corona comprise entre une électrode sous tension, qui est alimentée avec une tension alternative de 5000 à 25000 V, et une contre-électrode mise à la terre, afin de déposer un revêtement sur le substrat à l'aide d'un aérosol, caractérisé en ce qu'on met en dispersion ou en émulsion un agent filmogène polymère, améliorateur de glissement, dans un solvant ou un dispersant, de telle sorte que la dispersion ou l'émulsion en contienne de 0,1 à 20 % en poids, de préférence de 0,5 à 10 % en poids, par rapport au poids total de la dispersion ou de l'émulsion, et que la dispersion ou l'émulsion soit atomisée en présence d'un gaz vecteur, sous forme d'aérosol, dans la zone de décharge corona.

9. Procédé selon la revendication 8, caractérisé en ce que la vitesse de transport, avec laquelle le substrat à traiter se déplace à travers la zone de décharge corona, est proportionnelle à la valeur de la tension du courant alternatif sous laquelle fonctionne la décharge corona.

10. Procédé selon la revendication 8 ou 9, caractérisé en ce que les aérosols sont introduits dans la zone de décharge corona à l'aide de buses d'atomisation à deux matériaux ou de systèmes d'atomisation piézoélectriques fonctionnant aux ultrasons.

11. Procédé selon une quelconque des revendications 8 à 10, caractérisé en ce que les solutions présentent une concentration de 1 à 30% en poids d'agent polymère, par rapport au poids total de solution, de préférence de 5 à 20 % en poids.

12. Procédé selon la revendication 8, caractérisé en ce qu'on utilise comme gaz vecteur un gaz inerte, tel que l'air, l'azote ou un gaz noble.

13. Procédé selon la revendication 8, caractérisé en ce qu'on utilise comme gaz vecteur un gaz réactif, tel que p.ex. un halogène, le dioxyde de carbone, l'ammoniac ou le formaldéhyde, ou des mélanges de gaz réactifs avec des gaz inertes.
